# EUROPEAN PATENT APPLICATION

(11) **EP 1 038 483 A1**
(43) Date of publication of application: **27.09.2000**
(21) Application number: 99830167.5
(22) Date of filing: 23.03.1999
(51) Int. Cl.: A47J 43/10

(54) **Apparatus for emulsified milk based hot beverages**

(71) Applicant: FRABOSK CASALINGHI S.p.A., 25067 Lumezzane S.A. (Brescia) (IT)
(72) Inventor: Ghidini, Tiziano, 25067 Lumezzane S.A. (Brescia) (IT)
(74) Representative: Ghioni, Carlo Raoul Maria

(57) **Abstract**

An apparatus (1) for emulsified milk-based hot beverages comprises a first container (2) for the milk, and a second container (3) in engagement with the first container so as to form a hollow space (4) therewith. The apparatus comprises a closure lid (8) with which a plunger element (8) operating on the beverage is engaged for froth production. Water heating gives rise to heating of the beverage by heat conduction, preventing the beverage from being subjected to boiling.

## Description

The present invention relates to an apparatus for emulsified milk-based hot beverages comprising the features recited in the preamble of claim 1.

The invention further relates to a process for emulsifying milk-based hot beverages comprising the features recited in the preamble of claim 7, to be put into practice with the aid of the above apparatus.

It is known that there are manually-operated devices enabling emulsified milk-based hot beverages to be obtained, such as "cappuccino" or the like, without making use of steam jets.

Such a device is described in detail in the European document EP 713 669 in the name of the Applicant. This device comprises a container open at the top on which a closure lid can be engaged.

Associated with the closure lid is a plunger element. The plunger element is comprised of a rod slidably guided through the lid and with which a net-like disc-shaped body is engaged.

During use, the plunger element is moved with a reciprocating motion to cause a forced passage of milk through the net of the disc-shaped body, which will bring about a production of froth by effect of inclusion of air in the form of small bubbles into the milk.

Said emulsifying operation is carried out after milk heating, which operation takes place by putting the device on a hot plate.

While the above described device enables the milk to be emulsified in a practical and quick manner, it however has a problem of great importance connected with the milk heating operation. In fact, when the milk reaches its boiling temperature, formation of a surface fat film clogging the net of the disc-shaped body occurs, which will make the milk-emulsifying operation difficult and at the same time not very convenient. This condition is further worsened when the net of the disc-shaped body is made of a fine fabric. It is also to consider that when the milk reaches its boiling temperature it tends to boil over the container.

The above mentioned problems compel the user to pay a constant attention to the heating operation, and this is not always feasible. In addition, even when the user succeeds in carrying out a continuous checking on the milk situation during heating, reaching of the boiling temperature can be hardly foreseen.

The Applicant has found that if a hollow space containing a liquid having a boiling temperature lower than that of the beverage is arranged around the container, a milk froth of higher quality than that obtained by use of known apparatus is obtainable.

In particular, the invention relates to an apparatus for emulsified milk-based beverages comprising the features set forth in the characterizing portion of claim 1, and a process for emulsifying such beverages comprising the features set forth in the characterizing portion of claim 7.

Further features and advantages will become more apparent from the detailed description of a preferred, non-exclusive, embodiment of an apparatus for emulsified milk-based beverages in accordance with the present invention and a process for emulsifying such beverages to be put into practice by use of said apparatus. This description will be taken hereinafter with reference to the accompanying drawings given by way of non-limiting example, in which:

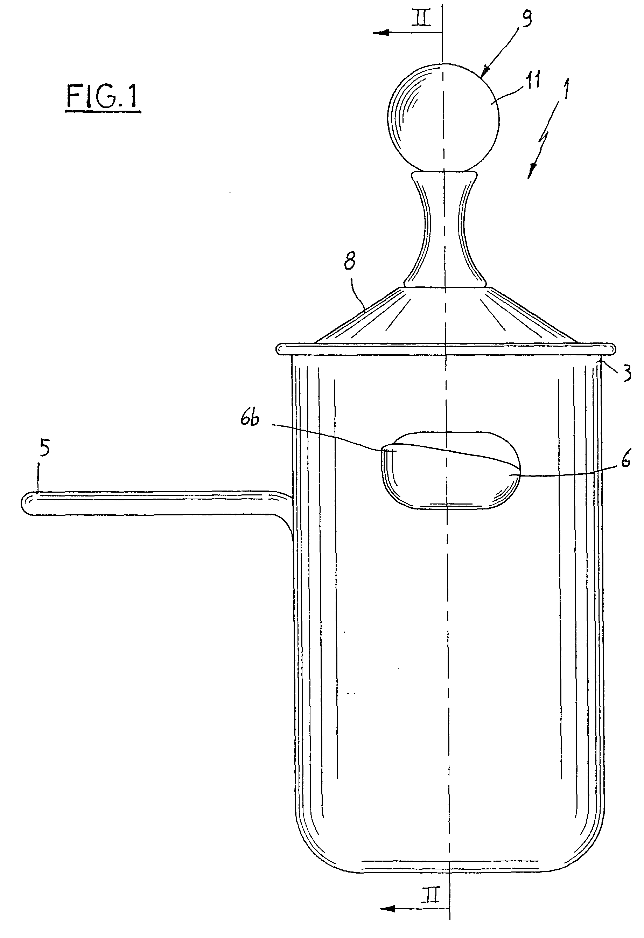

- Fig. 1 is an elevation view of the apparatus for emulsified milk-based hot beverages;
- Fig. 2 is a section of the apparatus, taken along line II-II in Fig. 1.

With reference to the drawings, an apparatus for emulsified milk-based hot beverages in accordance with the invention has been generally identified by reference numeral 1.

Apparatus 1 comprises at least one first container 2 open at the top, preferably made of stainless steel and having a cylindrical shape. Apparatus 1 further comprises at least one second container 3 made of stainless steel as well and also of cylindrical shape, in engagement with the first container so as to form a hollow space 4 therewith, said hollow space surrounding the first container and being intended for receiving a liquid such as water.

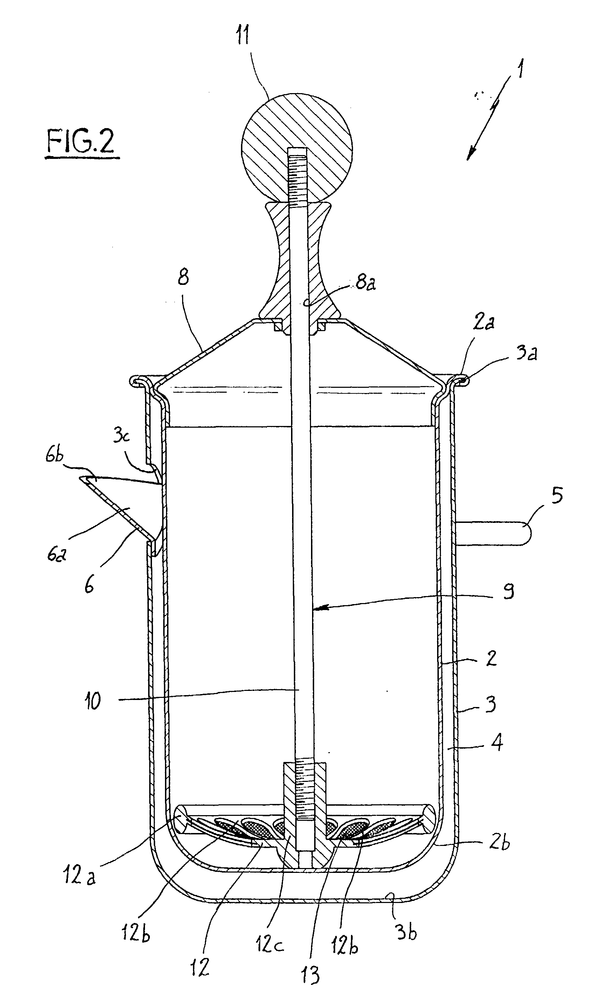

As viewed from the section in Fig. 2, the first container 2 has an upper rim 2a fastened to an upper rim 3a of the second container 3 in such a manner that the first container 2 keeps a suspended position within the second container 3. The upper rim 2a of the first container 2 can be fastened to the upper rim 3a of the second container 3 by a seaming operation for example, i.e. by overlapping and bending of both the above mentioned upper rims.

In detail, the hollow space 4 is defined by the whole outer surface 2b of the first container 2 and the whole inner surface 3b of the second container 3.

At least one grip handle 5 is further rigidly connected to the second container 3 for enabling an easy and sure displacement of apparatus 1.

Formed in the second container 3 is at least one side opening 3c through which introduction of the liquid into the hollow space 4 and/or possibly emptying of same can be carried out.

In more detail, the side opening 3c is preferably formed at such a position that an angle of a value included between 120° and 150°, preferably of about 135°, is defined between the opening itself and the grip handle 5, relative to the vertical geometric axis of apparatus 1.

Also provided at the side opening 3c is a channelling spout 6 which is adapted to facilitate said introduction and emptying operations. The channelling spout 6 is inclined downwardly, in the direction of the side opening 3c of the second container 3 and has a substantially concave upper surface 6a.

Preferably, the channelling spout 6 further comprises at least one raised side portion 6b turned towards the grip handle 5.

Apparatus 1 comprises a closure lid 8 preferably made of stainless steel as well, to be removably engaged with the first container 2 at the upper opening 2a. The closure lid 8 operatively supports at least one plunger element 9 which, as regards its essential parts, consists of a rod 10 and a disc-shaped body 12.

Rod 10 is slidably fitted in a through hole 8a of the closure lid 8 and has a sphere-shaped grip knob 11 at its upper end.

The disc-shaped body 12 is rigidly in engagement with a lower end of rod 10. In more detail, the disc-shaped body 12 is defined by an annular element 12a connected, through radially-extending arms 12b, to a central hub 12c into which rod 10 fits. Arms 12b hold a net 13 extending over the whole surface of the disc-shaped body.

For emulsifying milk-based hot beverages using apparatus 1 in accordance with the present invention, the beverage is introduced into the first container 2. A liquid consisting, for example, of water having a lower boiling temperature than the beverage is introduced into the hollow space 4.

For practical reasons it is preferable although not compulsory that water should be introduced first into the hollow space 4, followed by the beverage introduced into the first container 2.

Introduction of water into the hollow space 4 through the side opening 3c is facilitated by the channelling spout 6. In fact, due to the concave shape of spout 6, the necessary amount of water can be easily channelled into the hollow space 4, even taking it from a tap.

Once water has been introduced into the hollow space 4 and the beverage or milk has been introduced into the first container 2, apparatus 1 is exposed to the action of a flame by depositing the bottom of the second container 3 on a hot plate. Water contained in the hollow space 4, directly in contact with the surface 3b of the second container 3 is subjected to a temperature increase. Consequently, the beverage contained in the first container 2 is heated by heat conduction through the surface 2b of the first container 2.

Since a liquid having a lower boiling temperature than that of the beverage has been introduced into the hollow space 4, one can be perfectly sure that the beverage contained in the first container 2 will never reach its boiling temperature. During beverage heating, the water in the hollow space 4 having reached its boiling temperature may evaporate and come out through the side opening 3c. When the beverage reaches its optimal temperature for emulsifying, which can be easily recognized from boiling of water in the hollow space 4, the user can begin to prepare the emulsified beverage, by manually acting on the plunger element that possibly may have been associated with the first container 2 before the beverage heating operation. When water in the hollow space 4 is boiling, advantageously the channelling spout directs the hot steam flow towards a direction opposite to the grip handle 5, thereby protecting the user's hand from possible burns.

The invention achieves important advantages.

Providing a hollow space containing water between the heat source and the beverage to be emulsified enables said beverage to be heated in a controlled manner. In fact, the beverage held within the first container is advantageously brought to a relatively high temperature, excellent for emulsifying, without however reaching the beverage boiling temperature. This feature is very advantageous in that beverages or milk, heated with the apparatus in reference, are never subjected to formation of surface fat films causing clogging of the net-like disc-shaped body, neither are they subjected to boil over the container, as they do not reach their boiling point.

Therefore the user is not compelled to continuously pay particular attention to the beverage during heating of same for the purpose of intervening before it reaches its boiling point. It is also to note that by eliminating the formation of surface fat films, an efficient operation of the emulsifying apparatus is ensured.

It is also to point out that the spout presence greatly promotes the operation of introducing water into the hollow space, making said operation easy and practical.

Still with reference to the channelling spout and, in more detail, to its particular shape, the hot steam coming out of the hollow space is directed away from the grip handle so that the user's hands are not burnt.

It will be also recognized that the position of the side opening relative to the grip handle enables the user to pour the beverage out of the first container without hot water escaping from the hollow space.

It is advantageously possible to carry out operation of the plunger element 9 while keeping the apparatus on the turned-on hot plate, without any risk for the beverage to come to the boil. This is specifically advantageous when particular beverages or sweets, such as hot chocolate, pudding and the like, are to be prepared, said food requiring a mixing action for a relatively long time while the apparatus is being maintained on a turned-on hot plate.

In addition, the amount of milk froth obtained by use of such an apparatus is of better quality than that obtained with known apparatus, since the emulsified beverage or milk is not burnt by the container's surface directly in contact with the flame.

## Claims

1. An apparatus for emulsified milk-based hot beverages of the type comprising:
- a first container (2) open at the top, intended for receiving a milk-based beverage;
- a closure lid (8) for removable engagement with the first container (2);
- at least one plunger element (9) operatively engaged with the closure lid (8) and operating on the beverage for emulsifying it,
characterized in that it further comprises a second container (3) in engagement with the first container (2) so as to form a hollow space (4) with the latter, which hollow space surrounds the first container (2) and is intended for receiving a liquid.

2. An apparatus as claimed in claim 1, wherein said liquid has a lower boiling temperature than the boiling temperature of the beverage.

3. An apparatus as claimed in claim 1, wherein the second container (3) has an upper rim (3a) fastened to an upper rim (2a) of the first container (2), said first container (2) being in a suspended position within the second container (3).

4. An apparatus as claimed in claim 1, wherein said second container (3) comprises:
- at least one grip handle (5);
- a side opening (3c) formed at a position spaced apart from the grip handle (5) for filling and/or emptying the hollow space (4);
- a channelling spout (6) located close to the side opening (3c).

5. An apparatus as claimed in claim 4, wherein said side opening (3c) is formed in the second container (3) at such a position that an angle of a value included between 120° and 150° is defined between the side opening (3c) and the grip handle (5), around a vertical geometric axis of the apparatus.

6. An apparatus as claimed in claim 4, wherein said channelling spout (6) is inclined downwardly in the direction of the side opening (3c) of the second container (3) and has a concave upper surface (6a).

7. An apparatus as claimed in claim 6, wherein said channelling spout (6) has at least one side portion (3c) which is raised and turned towards the grip handle (5).

8. A process for emulsifying milk-based hot beverages comprising the steps of:
- introducing a milk-based beverage into a first container (2);
- introducing a liquid into a hollow space (4) surrounding the first container (2);
- heating the beverage contained in the first container (2);
- emulsifying the milk-based beverage making it pass through a froth-making element consisting of a plunger element (9),
characterized in that the step of heating the milk-based beverage takes place through heat transmission from the liquid present in the hollow space (4) to the beverage itself.

9. A process as claimed in claim 8, wherein the liquid introduced into the hollow space (4) has a lower boiling temperature than the beverage.

10. A process as claimed in claim 8, wherein said step of emulsifying the milk-based beverage is carried out simultaneously with the step of heating said beverage.

11. A process as claimed in claim 8, wherein said step of introducing liquid into the hollow space (4) takes place with the aid of a channelling spout (6) provided at a side opening formed in the second container (3) in engagement with the first container (2) so as to define said hollow space (4) therewith.
